Europäisches Patentamt

European Patent Office

Office européen des brevets

(19)

(11) Publication number : **0 480 881 A1**

## (12) EUROPEAN PATENT APPLICATION

(21) Application number : **91830354.6**

(22) Date of filing : **27.08.91**

(51) Int. Cl.⁵ : **A61C 17/06**

A request for correction of the Patent No. EP210958 into EP211808 ( description / 4th paragraph ) has been filed pursuant to Rule 88 EPC. A decision on the request will be taken during the proceedings before the Examining Division (Guidelines for Examination in the EPO, A-V, 2.2).

(30) Priority : **03.10.90 IT 4013090**

(43) Date of publication of application :
**15.04.92 Bulletin 92/16**

(84) Designated Contracting States :
**AT BE CH DE DK ES FR GB GR LI LU NL SE**

(71) Applicant : **CATTANI S.P.A.**
**Via G. Natta, 6/A**
**I-43100 Parma (IT)**

(72) Inventor : **Cattani, Augusto**
**Via Zanardi 12**
**I-43100 Parma (IT)**

(74) Representative : **Lanzoni, Luciano**
**BUGNION S.p.A. Via Emilia Est, 25**
**I-41100 Modena (IT)**

(54) **A separating and discharging device for liquids and solid particles, in particular for fluid suction equipment such as is used in dentistry.**

(57)    The invention relates to a separating and discharging device for liquids and solid particles, in particular for fluid suction equipment such as is used in dentistry. The device comprises a separation chamber (1) below which a drainage pump (8) is envisaged, which drainage pump 8 is equipped with an outlet valve (26) normally not in operation and which is brought into operation, when the level of the liquid in the separation chamber (1) reaches a pre-established level, by means of commands sent via probes (9) and (10) ; a syphon-shaped collection container (21) is envisaged between the separation chamber (1) and the outlet valve (26), on the bottom of which collection container (21) the solid particles collect and from which, via a narrow outlet (25), the liquids exit.

EP 0 480 881 A1

The invention relates to a separating and discharging device for liquids and solid particles, in particular for fluid suction equipment such as is used in dentistry.

In much of the suction equipment utilised in dentistry, which permits of removing fluids, comprising air, liquids and solid particles, from the mouth of the patient during an operation, a separation chamber is envisaged inside which, for example by means of a suction pump, a vacuum is created; the cannula which sucks the fluids from the patient's mouth is connected to the separation chamber and therein deposits the fluids. The aspirated liquids are then discharged from the separation chamber and sent to the municipal drains, for example, while the air is extracted from the separation chamber by the suction pump.

For the extraction of the liquids from the separation chamber, one of the known methods is the use of a drainage pump which removes the liquids from the separation chamber which, as mentioned above, is kept under vacuum, and discharges them into the environment, for example into the drains, at atmospheric pressure. The liquids extracted from the separating chamber contain solid particles which cannot be discharged into the drains and thus must be separated from the liquids. To this end filtering or sedimentation devices are usually envisaged, which filter or settle the liquids extracted from the separating chamber before they are discharged into the drains.

A device of the type described above is described and illustrated in patent no. EF. 210958 belonging to the present applicant. In prior art devices, the drainage pump is theoretically able to extract the foam from the separating chamber; in reality, however, the extraction of the foam by the drainage pump causes anomalous functioning of the device, in that it causes a large drop in drainage pump efficiency due to the presence of the foam, bringing about cavitation phenomena.

A general problem presented by these devices is that of how to obtain better separation of the solid particles from the liquid; a second general problem is that of making devices which are ever more compact and simple.

Aim of the present invention is that of eliminating the above-described drawbacks, by providing a separating device with drainage pump wherein the foam and solid particles cross the pump the least possible.

One advantage of the present invention is that of permitting the separation of very small solid particles.

Another advantage of the present invention is its very compact dimensions and its simplicity.

These aims and others are all attained by the present invention, as characterised in the claims which follow, which, as in the prior device EP 210958, comprises: a separation chamber, superiorly closed by a cover having a first hole which is connected to a negative pressure intake and having a second hole which is connected, directly or indirectly, to one or more cannulas which suck fluids from the patient's mouth; said separation chamber is equipped with a hole at its bottom and with a discharge check valve to discharge the liquids from the separation chamber; a drainage pump of known type, positioned below the said discharge check valve, which is normally not in operation, and is stopped and started in normal ways by start and stop signals which depend on the level of liquid in the separator; which drainage pump is kept in operation by means of a timer for a pre-established length of time after the stop command and is aimed at permitting the extraction of the liquid from the separation chamber; wherein between the bottom hole of the separation chamber and the outlet valve a syphon-shaped collection container is envisaged.

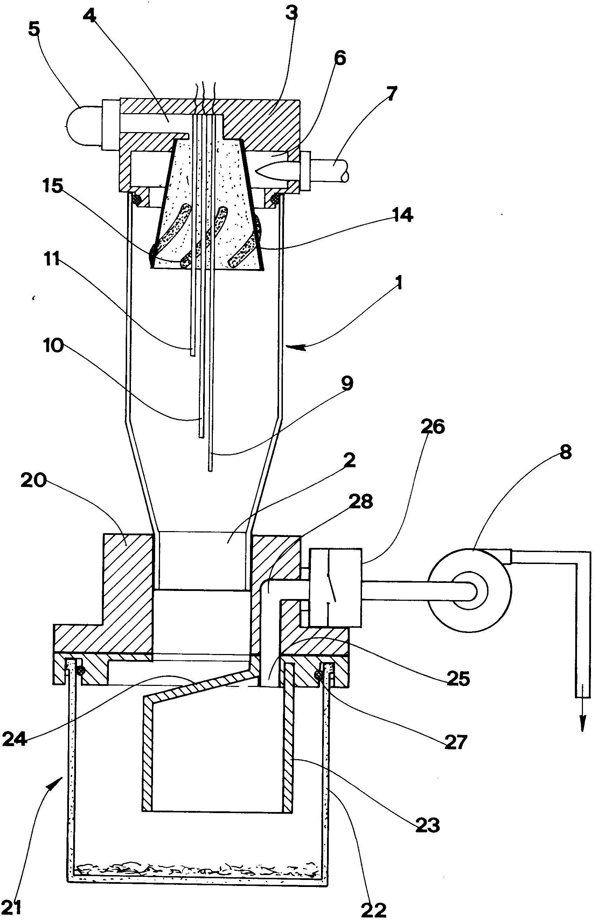

Further characteristics and advantages of the present invention will better emerge from the detailed description which follows, of a preferred but not exclusive embodiment of the device in question, illustrated in the form of a non-limiting example in the accompanying figure which shows a schematic vertical section.

The device comprises a separation chamber 1, substantially cylindrical in shape, whose lowest section converges towards a bottom hole 2. A cover 3 for the separation chamber 1 is envisaged, which cover 3 has a first hole 4 that is connected, by means of a first inlet 5 to a negative pressure intake not indicated in the figure; the cover 3 is further equipped with a second hole 6 which is connected, by means of a second inlet 7 to an aspirating cannula, or in cases where the equipment envisages two or more cannulas, to the collector of a board of known type, into which the fluids aspirated by the various cannulas flow.

The cover 3 is equipped with a trunco-conical element 14 on whose internal surface a plurality of screw threads 15 wind, which screw threads' 15 function is substantially that of preventing the rising of foam or drops of liquid inside the trunco-conical element 14 in such a way that the first inlet 5, and thus the negative pressure intake receive only air.

The invention further comprises a collection container 21, syphon-shaped, which is interpositioned between the separation chamber 1 and an outlet valve 26 via which the liquids contained in the separator are discharged.

Positioned below the outlet valve 26 a drainage pump 8 is envisaged, which is activated on command and which permits of extracting the liquids from the separator device.

The collection container 21 comprises, in its turn, an external cylindrical element 22, with closed bottom, which internally is in direct communication with the separation chamber 1 in such a way that the liquids and solid particles that descend from the bottom hole 2 of the separation chamber 1 can freely enter the collection container 21.

The collection container 21 further comprises an internal cylindrical element 23 whose bottom is open and positioned in proximity to the bottom of the external cylindrical element 22. The upper part of the internal cylindrical element 23 is equipped with a closing wall 24 which has a narrow outlet 25 having a considerably smaller diameter with respect to the bottom diameter of the internal cylindrical element 23. The closing wall 24 is inclined downwards and is arranged below the bottom hole 2 of passage without obstructing the existing passage between the separation chamber 1 and the collection container 21. The inclination of the closing wall 24, apart from realising the passage between separation chamber 1 and collection container 21, avoids the possibility of solid particles depositing on the closing wall 24 itself.

The capacity of the said collection container 21 is, for reasons which will be better evidenced below, quite large; it should be about the same capacity as that of the separation chamber 1.

An annular body 20 is envisaged to connect the various elements of the device.

The converging section of the separation chamber 1 is sealedly connected to the upper section of the annular body 20, while the collection container 21 is connected to the lower section of the same annular body 20. More precisely, the upper edge of the external cylindrical element 22 is removably connected to the external perimeter of the annular body 20, while on one side of the annular body 20 the area wherein the outlet 25 of the internal cylindrical element 23 is envisaged is connected; thus the passage of the liquid from the separation chamber 1 into the outlet 25 can only happen via the open bottom of the internal cylindrical element 23.

The external cylindrical element 22 is connected to the annular body 20 by means of a bayonet or screw attachment in such a way as to be easily detachable from the annular body 20. In order to ensure the connection seal an annular gasket 27 is envisaged.

Internally to the annular body 20 an outlet conduit 28 is bored, which connects the outlet 25 to the outlet valve 26.

The outlet valve 26, which is preferably of the unidirectional discharge check valve type, is externally connected to the annular body 20 at the position where the outlet conduit 20 exits from the annular body 20.

Inside the separation chamber 1 a first probe 9, a second probe 10, and a third probe 11, all of known type, are envisaged, whose connection wires exit from the separation chamber 1 via the cover 3. The probe pair 9 and 10 set the drainage pump 8 in operation, by means of an electric command signal when the two probes 9 and 10 are wetted by the liquid or foam which is present in the separation chamber 1, which liquid or foam's level must reach the level of the two probes 9 and 10. The probe pair 9 and 10 further provide an electric command signal to stop the drainage pump 8; this signal is sent when the level of the liquid inside the separation chamber 1 does not reach both of the probes 9 and 10. When the probes 9 and 10 send the stop signal to the drainage pump 0, a timer is envisaged which, when it receives the stop signal, enables the pump to operate for a short time after the preestablished period. The third probe 11 is a safety probe which interrupts the operation of the device when the liquid present in the said device reaches the level of the said third probe 11.

The device further comprises detecting means, positioned in proximity to the bottom of and externally to the external cylindrical element 22, aimed at detecting the presence of solid particles on the bottom of the external cylindrical element 22. The said detecting means, not illustrated in the figure, are of known type and may be realised by means of photo-cells, metal detectors or similar. The function of the said detecting means is to provide an electrical alarm signal when the layer of solid particles reaches a first pre-established level, and to provide a second electric stop signal when the layer of solid particles reaches a second pre-established level.

Finally, first and second transducers of known type are envisaged, not illustrated in the figure, which transform the electric signals sent by the detecting means respectively into an audio-visual alarm and a stop command for the device.

On starting the negative pressure intake, by means of an external command, the pump sucks air from the inside of the separator, in which separator the pressure progressively drops; the depression which is created in the inside of the separator causes the outlet valve 26 to close and the cannulas, which are now connected to a depressed atmosphere, can perform their function of aspirating liquid and other substances from the patient's mouth.

While the aspirated air exits from the top of the separator, through the first hole 4, the liquids and solid particles fall towards the collection container 21 until it is completely filled; the drainage pump 8 does not yet begin to operate since all of the lower section of the separation chamber 1 can be filled with liquid before the probes 9 and 10 are wetted and the drainage pump 8 is started.

Thus, a mass of still liquid is created in the collection container 21, which is the ideal situation both for the decantation of the solid particles, which are collected on the bottom of the external cylindrical element 22 and for the destruction of the foam which destruction is helped by the presence of a large quantity of liquid and by the vacuum in the separation chamber 1.

When the entering liquid reaches the probes 9 and 10, the drainage pump 8 is activated, which begins to extract the liquids from the separator. Since the section of the bottom hole 2 is considerably smaller than the lower section of the internal cylindrical element 23, and in general smaller than all of the section of the collection container 21, internally to the collection container 21, with the exception of the section which is in the immediate vicinity of the bottom hole 2, the velocity of the liquid is so low that it can be said to be practically still even during the discharge phase. Thus the ideal conditions described above continue even during the discharge phase. No movement of the solid particles is noted towards the outlet 25 of the collection container 21; the liquid which exits from the separator is therefore practically free of solid particles, and is in any case free of those solid particles (metal particles and similar) which the law prohibits from directing to the drains.

When, after discharge of the liquid, the probes 9 and 10 are no longer wet, the drainage pump 8 receives the stop signal. The timer keeps the drainage pump 8 in operation for a brief period so that at least the separation chamber 1 is completely emptied; in any case the extension of the operating period is never long enough to allow the liquid to descend below the level represented by the lower section of the internal cylindrical element 23. Given the large capacity of the collection container 21, this is always possible without its being necessary to start and stop the drainage pump 8 too frequently.

In this way, apart from avoiding, under any working conditions, turbulence that might disturb the solid particles deposited on the bottom of the collection container 21, the foam will never reach the drainage pump 8 since the foam is destroyed above the free level of the liquid or on crossing the liquid itself. It should be noted, finally, that the constant presence of liquid facilitates the destruction of the foam in the vacuum.

Given that the operation of the present device is not obstructed in any way by the presence of even large quantities of foam, the said device can also be used to separate fluids which are aspirated during the course of surgical operations wherein there is a large exit of blood, which, coagulating, causes the formation of large quantities of foam which was particularly difficult to destroy for the prior art devices.

When, after a long operating period of the device, the levels of the solid particles that are deposited on the bottom of the collection container 21 reach the first pre-established level, the detecting means send an alarm signal which, transformed by the first transducers into an audio-visual signal, indicate the presence of a certain quantity of deposited solid particles. The operator should then stop the device and proceed to the emptying of the said solid particles by disconnecting the external cylindrical element 22 from the separation chamber 1. Preferably the eternal cylindrical element 22 which contains the solid particles should be eliminated and a new empty one substituted.

In the case in which the operator does not remove the accumulated particles, and the said particles continue to accumulate until reaching the second pre-established level, the detecting means send a signal which, transformed by the second transducers, stops the device and prevents the continuation of functioning until the particles are removed. It should be noted that, when the device is stopped in order to effect the removal of the solid particles, the timer causes, as described before, a partial emptying of the collection container 21; thus, when disconnecting the external cylindrical element 22, there is no overspilling of the liquid inside.

The first pre-established level is at such a distance from the bottom of the internal cylindrical element 23 that between the level of the solid particles and the bottom of the internal cylindrical element 23 an area is created which is greater than the section of the bottom of the said internal cylindrical element 23; this is to avoid a situation wherein, owing to the diminution of the section of passage of the liquid, the velocity of the liquid itself can increase and entrain solid particles towards the discharge outlet 25. The second preestablished level is kept, for the same reason, at such a distance from the bottom of the internal cylindrical element 23 that the passage which is created between the level of the solid particles and the bottom of the internal cylindrical element 23 has an area which is equal to or slightly less than the area of the bottom section of the same internal cylindrical element 23.

## Claims

1) A separating and discharging device for liquids and solid particles, in particular for such equipment as is used in dentistry, comprising:
– a separation chamber 1 superiorly closed by a cover 3 having a first hole 4 which is connected to a negative pressure intake not indicated in the figure and having a second hole 6 which is connected, directly or indirectly, to one or more cannulas which such fluids from the patient's mouth; being further equipped with a hole 2 at its bottom and with a unidirectional outlet valve 26 to discharge the liquids from the separation chamber 1;
– a drainage pump 8 of known type, positioned below the said outlet valve 26, which drainage pump 8 is normally not in operation, and is stopped and started in normal ways by start and stop signals which depend on the level of liquid in the separator; which drainage pump 8 is kept in operation by means of a timer for a pre-established length of time after the stop command and is aimed at permitting the extraction of the liquid from the separation chamber 1;

– wherein between the bottom hole 2 of the separation chamber 1 and the outlet valve 26 a syphon-shaped collection container 21 is envisaged.

**2)** Device as in claim 1 wherein said collection container 21 comprises: an external cylindrical element 22, with closed bottom, which internally is in direct communication with the separation chamber 1; an internal cylindrical element 22 whose bottom is open and positioned in proximity to the bottom of the external cylindrical element 22, said internal cylindrical element 23 having a closing wall 24 equipped with a narrow outlet 25 having a considerably smaller diameter with respect to the bottom diameter of the said internal cylindrical element 23, which outlet 25 is connected to the said outlet valve 26 and via which the liquid exits from the device.

**3)** Device as in claim 2 comprising detecting means of known type, positioned in proximity to the bottom of and externally to the external cylindrical element 22, aimed at detecting the presence of solid particles on the bottom of the external cylindrical element 22 and at providing an electrical alarm signal when the layer of solid particles reaches a first pre-established level, and to provide a second electric stop signal when the layer of solid particles reaches a second pre-established level; first transducers of known type being envisaged to transform the said electric alarm signal into audio-visual signals, and second transducers of known type being evisaged to transform the said stop signal into a stop command for the device.

**4)** Device as in claim 2 comprising an annular body 20 superiorly to which is sealedly connected said separation chamber 1; internally to which an outlet conduit 28 is bored, which connects the outlet 25 to the outlet valve 26; inferiorly to which annular body 20 edge the upper edge of the said external cylindrical element 22 and the said internal cylindrical element 23 at the level of the said outlet 25 are sealedly connected; being envisaged that the connection between the said annular body 20 and the said external cylindrical element 22 is of a removable type.

**5)** Device as in claim 4, wherein the upper closing wall 24 of the said internal cylindrical element 23 is inclined downwards from the said outlet 25.

**European Patent Office**

## EUROPEAN SEARCH REPORT

Application Number

EP    91 83 0354

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 211 808 (CATTANI) <br> * page 4, line 8 - line 12; figures * <br> * page 5, line 10 - line 14 * <br> * page 5, line 23 - page 6, line 12 * | 1 | A61C17/06 |
| A |  | 2,4,5 |  |
|  | --- |  |  |
| Y | FR-A-2 196 833 (AB FILTRATOR) <br> * page 4, line 3 - line 10; figures * | 1 |  |
|  | --- |  |  |
| A | EP-A-0 023 036 (SIEMENS) <br> * page 4, line 31 - page 5, line 9; figures * | 1,2 |  |
|  | --- |  |  |
| A | AU-B-507 783 (BAILS ET AL.) <br> * figures 3,4 * | 1,2 |  |
|  | ----- |  | TECHNICAL FIELDS SEARCHED (Int. Cl.5 ) <br><br> A61C <br> A61M |

The present search report has been drawn up for all claims

| Place of search | Date of completion of the search | Examiner |
|---|---|---|
| THE HAGUE | 10 JANUARY 1992 | GODOT T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)